# EUROPEAN PATENT APPLICATION

(11) **EP 2 604 823 A2**
(43) Date of publication of application: **19.06.2013**
(21) Application number: 12195675.9
(22) Date of filing: 05.12.2012
(51) Int. Cl.: F02C 3/20, F02C 3/34

(54) **Method and system for separating CO2 from N2 and O2 in a turbine engine system**

(30) Priority: 13.12.2011 US 201113324466
(71) Applicant: General Electric Company, Schenectady, New York 12345 (US)
(72) Inventor: Kulkarni, Parag Prakash, Schenectady, NY New York 12345 (US); Draper, Samuel David, Greenville, SC South Carolina 29615 (US); Shisler, Roger Allen, Niskayuna, NY New York 12309 (US)
(74) Representative: Cleary, Fidelma

(57) **Abstract**

A method of separating carbon dioxide (CO₂) from nitrogen (N₂) and oxygen (O₂) within a turbine engine system (12) includes, in an exemplary embodiment, directing an air stream (30) into an air separation unit (ASU) (28), separating N₂ from the air stream in the ASU to form an oxygen (O₂) rich air stream, and directing the O₂ rich air stream to the combustor (24) to mix with a fuel for combustion forming hot combustion gases, containing O₂ and CO₂, which are used to rotate the turbine (16). The method also includes directing turbine expander exhaust gases to a heat recovery steam generator (HRSG) (50) to create steam, directing exhaust from the HRSG to a condenser (56) to separate water from a mixture of O₂ and CO₂ gases, and directing the mixture of O₂ and CO₂ gases to a separation system (69) where the CO₂ is separated from the O₂ gases and removed from the separation system.

## Description

### BACKGROUND OF THE INVENTION

The field of the invention relates generally to turbine engine systems, and more particularly, to turbine engine systems in power generation plants.

Turbine engines produce mechanical energy using a working fluid supplied to the engines. More specifically, in known turbine engines, the working fluid may be air that is compressed and delivered, along with fuel and oxygen, to a combustor, wherein the fuel-air mixture is ignited. As the fuel-air mixture bums, its energy is released into the working fluid as heat. The temperature rise causes a corresponding increase in the pressure of the working fluid, and following combustion, the working fluid expands as it is discharged from the combustor downstream towards at least one turbine. As the working fluid flows past each turbine, the turbine is rotated and converts the heat energy to mechanical energy in the form of thrust or shaft power connected to a generator.

Air pollution concerns worldwide have led to stricter emissions standards both domestically and internationally. Pollutant emissions from at least some gas turbines are subject to government standards that regulate the emission of oxides of nitrogen (NOx), unburned hydrocarbons (HC), carbon monoxide (CO), and carbon dioxide (CO₂). Air has been used as a working fluid because it is readily available, free, and has predictable compressibility, heat capacity, and reactivity (oxygen content) properties. However, because of the high percentage of nitrogen in air, during the combustion process, nitrogen oxides are formed. In addition, carbon contained in the fuel may combine with oxygen contained in the air to form carbon monoxide and/or carbon dioxide.

To facilitate reducing NOx emissions, at least some known gas turbine engines operate with reduced combustion temperatures and/or Selective Catalytic Reduction (SCR) equipment. However, operating at reduced combustion temperatures reduces the overall efficiency of the gas turbine engine. Moreover, any benefits gained through using known SCR equipment may be outweighed by the cost of the equipment and/or the cost of disposing the NOx. Similarly, to facilitate reducing CO emissions an oxidation catalyst may be used. To facilitate reducing CO₂ emissions, at least some known gas turbine engines channel turbine exhaust through a gas separation unit to separate CO₂ from nitrogen (N₂), the major component when using air as the working fluid, and at least one CO₂ compressor. Again however, the benefits gained through the use of such equipment may be outweighed by the costs of the equipment.

### BRIEF DESCRIPTION OF THE INVENTION

In one aspect, a method of separating carbon dioxide (CO₂) from nitrogen (N₂) and oxygen (O₂) in a turbine engine system is provided. The turbine engine system includes a first compressor coupled to a turbine expander by a rotatable shaft, and a combustor coupled in flow communication to the compressor and the first turbine. The method includes directing an air stream into an air separation unit (ASU), separating N₂ from the air stream in the ASU to form an oxygen (O₂) rich air stream, and directing the O₂ rich air stream to the combustor to mix with a fuel for combustion forming hot combustion gases, containing O₂ and CO₂, which are used to rotate the turbine. In some embodiments, the method also includes directing turbine exhaust gases to a heat recovery steam generator (HRSG) to create steam, directing exhaust from the HRSG to a condenser to separate water from a mixture of O₂ and CO₂ gases, and directing the mixture of O₂ and CO₂ gases to a separation system, where the CO₂ is separated from the O₂ gases and removed from the separation system.

In another aspect, a system in separating CO₂ and N₂ in a turbine engine apparatus is provided. The system includes an air separation unit (ASU) for separating N₂ from an air stream that forms an oxygen (O₂) rich air stream, a heat recovery steam generator (HRSG), and a condenser to separate water from a mixture of O₂ and CO₂ gases from the HRSG. The system also includes a separation system where the CO₂ is separated from the O₂ gases and removed from the separation system.

### BRIEF DESCRIPTION OF THE DRAWINGS

Embodiments of the present invention will now be described, by way of example only, with reference to the accompanying drawings, in which:
Figure 1 is a schematic illustration of an exemplary combined cycle power generation plant.
Figure 2 is a schematic illustration of a CO₂ separation system.
Figure 3 is a schematic illustration of a stoichieometric exhaust gas recirculation system.

### DETAILED DESCRIPTION OF THE INVENTION

Novel methods of producing a carbon dioxide (CO₂) rich stream and a nitrogen (N₂) rich stream from combustion of a hydrocarbon fuel source (natural gas, oil, coal) are disclosed. Applications of the novel methods involve electricity production, enhanced oil recovery, carbon capture, and sequestration. The methods disclosed provide separation of CO₂ and N₂ gases which are products of a combustion process. Methods and systems for separating N₂ and CO₂ from the working air and/or exhaust in turbine engine systems in power generation plants are described below in detail. In addition, oxygen (O₂) is separated from a CO₂ and O₂ mixture in the exhaust of the turbine engine system, and may be recycled back to the oxyfuel combuster of the turbine engine system. Removing the N₂ from the working air reduces NOx emissions. Also, the CO₂ removed from the exhaust may be sequestered for use in enhanced oil recovery. A stream of removed CO₂ may contain no O₂ or less that 1 percent of O₂. Advantages of the methods and systems described below include removing O₂ from a CO₂ stream with lower energy and lower costs than known methods. With O₂ removed from a CO₂ stream, the CO₂ stream may be used for injection in an oil well for enhanced oil recovery. Streams of CO₂ that do include O₂ can be detrimental to oil recovery because of the reactivity of O₂. In addition, advantages of the methods and systems may include improved flexibility of operation of a power generation plant, a safer power generation plant because of reduced CO emissions and a reduced need for the use of CO oxidation catalysts.

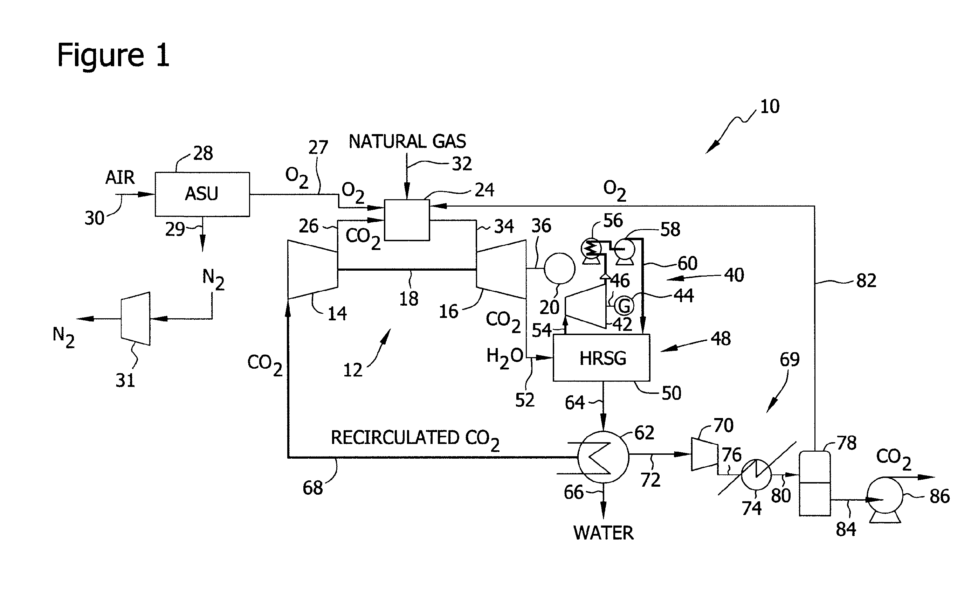

Figure 1 is a schematic illustration of an exemplary combined-cycle power generation plant 10 that includes a gas turbine engine 12. Gas turbine engine 12 includes a compressor 14 that is coupled to a turbine expander 16 (also referred to in the art as a "turbine") via a rotatable shaft 18. Compressor 14 receives air at locally atmospheric pressures and temperatures. Turbine expander 16 is coupled to a first electrical generator 20 via a first rotor 22. Gas turbine engine 12 also includes a combustor 24 coupled in flow communication with compressor 14. Combustor 24 receives at least a portion of recirculated CO₂ compressed by compressor 14 via a conduit 26. In addition, an air separation unit (ASU) 28 is coupled in flow communication with combustor 24 by a conduit 27. ASU 28 separates N₂ from an air stream 30 and makes air stream 30 rich in O₂. The O₂ rich air stream 30 is directed into combustor 24. The N₂ is directed to a compressor 31 through a conduit 29 for compression and sequestration, e.g., by injection underground.

Combustor 24 is also coupled in flow communication with at least one fuel source 32 and receives fuel from the fuel source, for example, natural gas. The air and fuel are mixed and combusted within combustor 24 which produces hot combustion gases. Turbine expander 16 is coupled in flow communication with combustor 24, and turbine expander 16 receives the hot combustion gases via a combustion gas conduit 34. Turbine expander 16 converts the heat energy within the gases to rotational energy. The rotational energy is transmitted to generator 20 via rotor 36, wherein generator 20 converts the rotational energy to electrical energy for transmission to at least one load, including, but not limited to, an electrical power grid.

In the exemplary embodiment, plant 10 also includes a steam turbine engine 40. More specifically, steam turbine engine 40 includes a steam turbine 42 coupled to a second electrical generator 44 via a second rotor 46. Power plant 10 also includes a steam generation system 48. In the exemplary embodiment, system 48 includes a heat recovery steam generator (HRSG) 50 that is coupled in flow communication with turbine 16 via at least one conduit 52. HRSG 50 receives exhaust gases from turbine expander 16 via exhaust gas conduit 52. The exhaust from turbine includes O₂, H₂O, and CO₂. HRSG 50 is coupled in flow communication with steam turbine 42 via a steam conduit 54.

Conduit 54 channels steam from HRSG 50 to steam turbine 42 which converts the thermal energy in the steam to rotational energy. The rotational energy is transmitted to generator 44 via rotor 46, wherein generator 44 converts the rotational energy to electrical energy for transmission to at least one load, including, but not limited to, the electrical power grid. The exhaust steam from turbine 42 is directed to a condenser 56 where the exhaust steam is condensed to water. A pump 58 is coupled in flow communication with condenser 56. Pump 58 pumps the condensed water through a conduit 60 that is coupled in flow communication with HRSG 50.

In addition, the exhaust of the HRSG 50 is directed to a condenser 62 through a conduit 64 that is that is coupled to HRSG 50 and condenser 62. Exhaust from HRSG 50 includes O₂, H₂O, and CO₂. Water is removed from condenser 62 through an outlet conduit 66. A portion of CO₂ is recirculated back to compressor 14 through a conduit 68. A separation system 69 is used to separate the excess O₂ from CO₂ by compressing the mixture of CO₂ and O₂ and cooling the compressed mixture. Separation system 69 includes a compressor 70, a heat exchanger 74, and a separator 78.

The remainder of the CO₂ and O₂ is directed to compressor 70 through conduit 72 to compress the CO₂ and O₂ mixture. The compressed CO₂ and O₂ mixture is directed to heat exchanger 74 through a conduit 76 to cool down the mixture to temperatures of between about minus 60°C to about minus 120°C. The cooled CO₂ and O₂ mixture is directed to separator 78 through a conduit 80 where the CO₂ is separated as either a liquid or a solid. A non-condensable O₂ rich stream is recycled to combustor 24 from separator 78 through a conduit 82. The liquid/solid CO₂ is pumped from separator 78 through conduit 84 by pump 86 for sequestration.

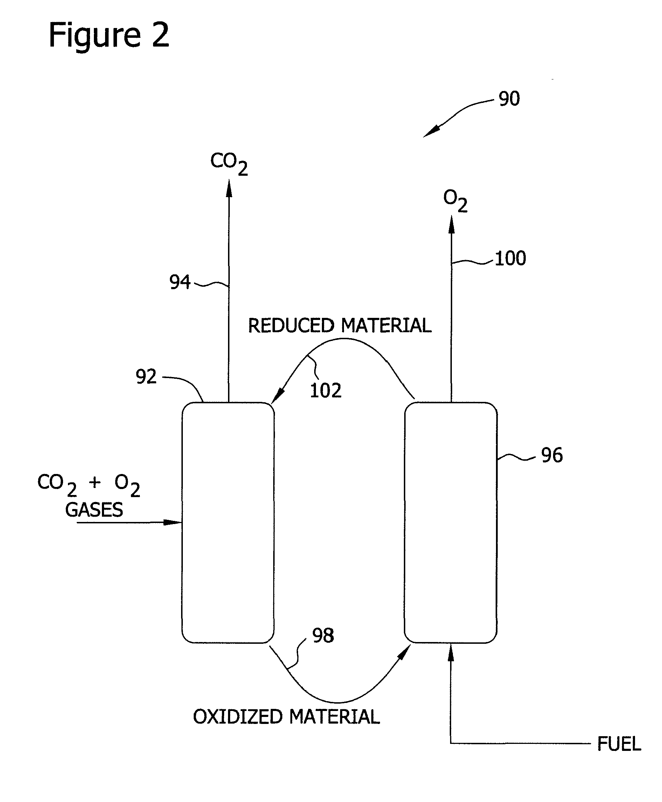

In another embodiment, a CO₂ and O₂ separation system 90 replaces separation system 69 described above. Referring also to Figure 2, separation system 90 includes a first chamber 92 that includes a oxygen transfer material, for example, a metal-metal oxide material, to remove O₂ from the CO₂ and O₂ mixture described above. Any suitable metal-metal oxide may be used, for example, a Cu-CuO material and the like. The oxygen transfer material is oxidized by the O₂ thereby removing the O₂ from the CO₂ and O₂ mixture. The CO₂ is removed from first chamber 92 through an outlet conduit 94 for sequestration. The oxidized material is directed to a second chamber 96 through a conduit 98 where the oxidized material is reduced by reacting with a fuel, for example natural gas. The O₂ is removed from the oxidized material by the fuel. The fuel and 02 is removed from second chamber 96 through an outlet conduit 100 and recirculated to combustor 24 (shown in Figure 1). The reduced material is recycled to first chamber 92 through conduit 102. In another embodiment, O₂ may be removed from the CO₂ and O₂ mixture by adding hydrogen (H₂) and combusting the mixture using a burner of catalytic oxidizer. The H₂ may be generated bypassing a small amount of fuel, for example natural gas, through a reformer. Also, the H₂ may be generated by using electricity generated from generator 20 (shown in Figure 1) split water.

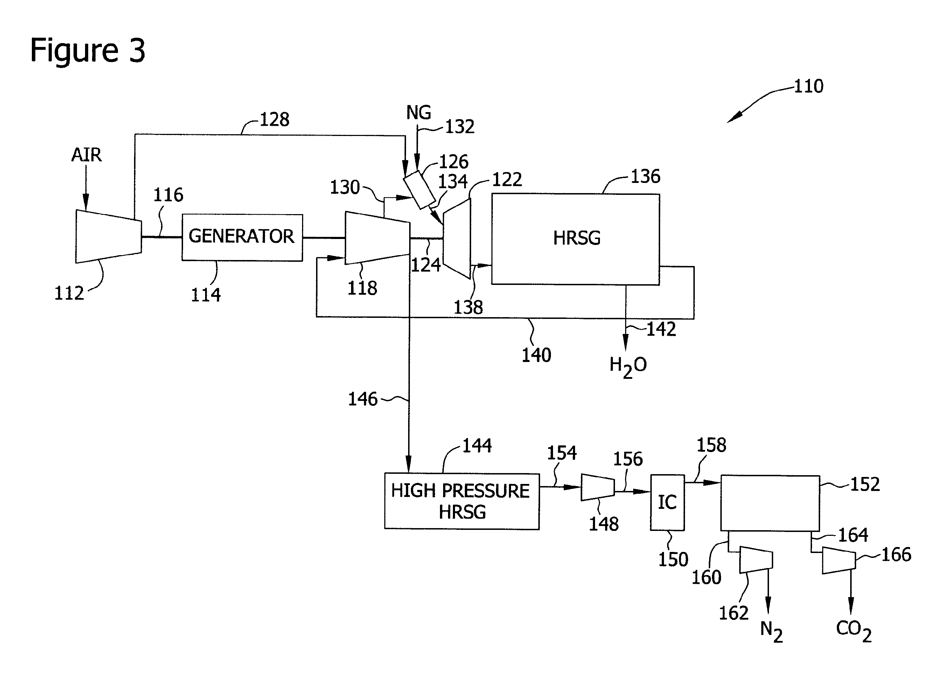

Figure 3 is a schematic illustration of an exemplary stoichiometric exhaust gas recirculation system (SEGR) 110. SEGR 110 includes a first compressor 112 connected to a generator 114 by a first rotatable shaft 116. A second compressor 118 is also connected to generator 114 by a second rotatable shaft 120, and to a gas turbine expander 122 by a third rotatable shaft 124. A combustor 126 is coupled in flow communication with first compressor 112, and with second compressor 118. Combustor 126 receives at least a portion of air compressed by compressors 112 and 118 and via air conduits 128 and 130.

Combustor 126 is also coupled in flow communication with at least one fuel source 132 and receives fuel from the fuel source, for example, natural gas. The air and fuel are mixed and combusted within combustor 126 which produces hot combustion gases. Turbine expander 122 is coupled in flow communication with combustor 126, and turbine expander 122 receives the hot combustion gases via a combustion gas conduit 134. Turbine expander 122 converts the heat energy within the gases to rotational energy.

SEGR 110 also includes a heat recovery steam generator (HRSG) 136 coupled in flow communication to turbine 122 by an exhaust conduit 138. HRSG 136 receives exhaust gases from turbine 122 via exhaust gas conduit 138. The exhaust from turbine 112 includes N₂, H₂O, and CO₂. HRSG 136 is coupled in flow communication with second compressor 118 via a conduit 140. The exhaust gases may be recirculated to second compressor 118 through conduit 140 Water collected in HRSG 136 is removed through outlet conduit 142.

A portion of the exhaust gases from second compressor 118 is directed to a high pressure HRSG 144 via a conduit 146. A separation system 147 is used to separate the excess N₂ from CO₂ from the exhaust gases by compressing the exhaust gases and cooling the compressed gases. Separation system 147 includes HRSG 144, a compressor 148, an intermediate cooler 150, and a separator 152. The exhaust gases are directed from HRSG 144 to a compressor 148 via a conduit 154 where the gases are compressed to about 1000 psi to about 2000 psi (about 6,895 kPa to about 13710 kPa).

The compressed gases are directed to intermediate cooler 150 through a conduit 156 to cool down the gases. The cooled gases are directed to separator 152 through a conduit 158 where the CO₂ may be separated using a physical solvent, for example dimethyl-ether-polyethylene-glycol (DEPG) or methyl alcohol, by absorption. A non-condensable N₂ rich stream is removed from separator 152 through a conduit 160 to a compressor 162 for sequestration. The CO₂ is removed from separator 152 through conduit 164 to a compressor 166 for sequestration.

In another embodiment, intermediate cooler 150 cools the gases to temperatures of between about minus 60°C to about minus 120°C. The cooled gases containing CO₂ and N₂ is directed to separator 152 through conduit 158 where the CO₂ is separated as either a liquid or a solid. A non-condensable N₂ rich stream is removed from separator 152 through a conduit 160 to a compressor 162 for sequestration. The liquid/solid CO₂ is pumped from separator 152 through conduit 164 to a compressor 166 for sequestration.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. The modifier "about" used in connection with a quantity is inclusive of the stated value and has the meaning dictated by the context (for example, includes the degree of error associated with the measurement of the particular quantity). "Optional" or "optionally" means that the subsequently described event or circumstance may or may not occur, or that the subsequently identified material may or may not be present, and that the description includes instances where the event or circumstance occurs or where the material is present, and instances where the event or circumstance does not occur or the material is not present. The singular forms "a", "an" and "the" include plural referents unless the context clearly dictates otherwise. All ranges disclosed herein are inclusive of the recited endpoint and independently combinable. As used herein, the phrases "adapted to," "configured to," and the like refer to elements that are sized, arranged or manufactured to form a specified structure or to achieve a specified result.

Exemplary embodiments of a system for separating O₂, CO₂ and N₂ from a turbine engine are described above in detail. The system is not limited to the specific embodiments described herein, but rather, components of the system may be utilized independently and separately from other components described herein. Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method of separating carbon dioxide (CO₂) and nitrogen (N₂) in a turbine engine system (12), the turbine engine system comprising a first compressor (14) coupled to a turbine expander (16) by a rotatable shaft (18), and a combustor (24) coupled in flow communication to the compressor and the turbine, said method comprising:
directing an air stream (30) into an air separation unit (ASU) (28);
separating N₂ from the air stream in the ASU to form an oxygen (O₂) rich air stream;
directing the O₂ rich air stream to the combustor to mix with a fuel (32) for combustion forming hot combustion gases containing O₂ and CO₂, which are used to rotate the turbine;
directing turbine expander exhaust gases to a heat recovery steam generator (HRSG) (50) to create steam;
directing HRSG exhaust to a condenser (56) to separate water from a mixture of O₂ and CO₂ gases; and
directing the mixture of O₂ and CO₂ gases to a separation system (69) where the CO₂ is separated from the O₂ gas and removed from the separation system.

2. The method in accordance with claim 1, further comprising directing the separated N₂ from the ASU (28) to a second compressor (31) to compress the N₂.

3. The method in accordance with claim 1 or 2, wherein the separation system (69) comprises a compressor (70), a heat exchanger (74) and a separator (78), and said directing the mixture of O₂ and CO₂ gases to a separation system comprises compressing the mixture of O₂ and CO₂ gases with the compressor, cooling the mixture of O₂ and CO₂ gases to a temperature of about minus 60°C to about minus 120°C, and separating non-condensable O₂ from liquid or solid CO₂.

4. The method in accordance with claim 3, wherein the separated CO₂ is directed to a compressor (86) to compress the CO₂.

5. The method in accordance with claim 1 or 2, wherein the separation system (90) comprises a first chamber (92) that has therein an oxygen transfer material and a second chamber (96) coupled to a fuel source, and said directing the mixture of O₂ and CO₂ gases to a separation system comprises:
directing the mixture of O₂ and CO₂ gases to the first chamber where the O₂ is removed from the mixture of O₂ and CO₂ gases by oxidation of the oxygen transfer material; and
removing the CO₂ from the first chamber.

6. The method in accordance with claim 5, further comprising directing the oxidized material to the second chamber (96) where the O₂ is removed from the oxidized material by reducing the oxidized material with the fuel; and
removing the O₂ rich fuel from the second chamber and directing the O₂ rich fuel to the combustor (24).

7. The method in accordance with claim 1 or 2, wherein the separation system comprises (147) a high pressure HRSG (144), a compressor (148), an intermediate cooler (150), and a separator (152), and wherein the air stream is directed into the first compressor (112) and bypassing the ASU, and directing turbine expander (122) exhaust gases to a heat recovery steam generator (HRSG) (136) further comprises:
removing water from the HRSG (136);
directing cooled gases from the turbine that contain a mixture of N₂ and CO₂ to a second compressor (118); and
directing exhaust gases from the second compressor to the high pressure HRSG.

8. The method in accordance with claim 7, further comprising:
compressing the mixture of N₂ and CO₂ gases with the separation system compressor (148) to a pressure of about 1000 psi to about 2000 psi;
cooling the mixture of N₂ and CO₂ gases;
directing the cooled mixture of N₂ and CO₂ gases to the separator (152); and
separating the CO₂ from the mixture of N₂ and CO₂ gases with a physical solvent by absorption or as a liquid or a solid.

9. The method in accordance with claim 8, further comprising:
removing the CO₂ from the separator (152); and
removing the N₂ from the separator.

10. The method in accordance with claim 8 or 9, wherein the physical solvent comprises at least one of dimethyl-ether-polyethylene-glycol (DEPG) and methyl alcohol.

11. The method in accordance with claim 8 or 9, further comprising:
wherein cooling the mixture of N₂ and CO₂ gases comprises cooling to a temperature of about minus 60°C to about minus 120°C;
and wherein separating the CO₂ from the mixture of N₂ and CO₂ gases comprise separating a liquid or a solid.

12. A system for separating CO₂ and N₂ from combustion products within a turbine engine apparatus (12), said system comprising:
an air separation unit (ASU) (28) for separating N₂ from an air stream (30) that forms an oxygen (O₂) rich air stream;
a heat recovery steam generator (HRSG) (50) that produces an exhaust stream;
a condenser (56) to separate water from a mixture of O₂ and CO₂ gases from the HRSG exhaust stream; and
a separation system (69) where the CO₂ is separated from the O₂ gases and removed from the separation system (69).

13. The system in accordance with claim 12, wherein the separation system comprises:
a compressor (70);
a heat exchanger (74) configured to cool a mixture of O₂ and CO₂ gases to a temperature of about minus 60°C to about minus 120°C; and
a separator (78) configured to separate non-condensable O₂ from liquid or solid CO₂.

14. The system in accordance with claim 12, wherein the separation system (69) comprises:
a first chamber (92) that has therein an oxygen transfer material, the first chamber (92) is configured to remove O₂ from the mixture of O₂ and CO₂ gases by oxidation of the oxygen transfer material; and
a second chamber (96) coupled to a fuel source, the second chamber configured to reduce the oxidized oxygen transfer material by a reaction with the fuel.

15. The system in accordance with claim 12, wherein the separation system comprises a high pressure HRSG (144), a compressor (148), an intermediate cooler (150), and a separator (152).

16. The system in accordance with claim 15, wherein the system does not include an ASU to separate N₂, and wherein:
the compressor (148) is configured to compress a mixture of N₂ and CO₂ gases to a pressure of about 1000 psi to about 2000 psi;
the intermediate cooler (150) is configured to cool the mixture of N₂ and CO₂ gases; and
the separator (152) is configured to include a physical solvent to separate the CO₂ from the mixture of N₂ and CO₂ gases by absorption.

17. The system in accordance with claim 16, wherein the physical solvent comprises at least one of dimethyl-ether-polyethylene-glycol (DEPG) and methyl alcohol.

18. The system in accordance with claim 15, wherein the system does not include an ASU to separate N₂, wherein:
the compressor (148) is configured to compress a mixture of N₂ and CO₂ gases to a pressure of about 1000 psi to about 2000 psi;
the intermediate cooler (150) is configured to cool the mixture of N₂ and CO₂ gases to a temperature of about minus 60°C to about minus 120°C; and
the separator (152) is configured to separate the CO₂ from the mixture of N₂ and CO₂ gases as a liquid or a solid.
